# EUROPÄISCHE PATENTSCHRIFT

(11) **EP 1 794 036 B1**
(45) Veröffentlichungstag und Bekanntmachung des Hinweises auf die Patenterteilung: **09.12.2009**
(21) Anmeldenummer: 05770531.1
(22) Anmeldetag: 14.07.2005
(51) Int. Cl.: B60R 21/04

(54) **STOSSABSORBER AUS EINEM FASERWERKSTOFF**
SHOCK ABSORBER MADE OF A FIBER MATERIAL
AMORTISSEUR DE CHOC CONSTITUE D'UN MATERIAU RENFORCE PAR DES FIBRES

(30) Priorität: 22.09.2004 DE 102004046240
(43) Veröffentlichungstag der Anmeldung: 13.06.2007
(73) Patentinhaber: Faurecia Innenraum Systeme GmbH, 76767 Hagenbach (DE)
(72) Erfinder: SIELHORST, Bernhard, 36025 Sontrag (DE); ZIMMERMAN, Eric, 34125 Kassel (DE)
(74) Vertreter: Richardt, Markus Albert
(86) Internationale Anmeldenummer: PCT/EP2005/007655
(87) Internationale Veröffentlichungsnummer: WO 2006/032315

(56) Entgegenhaltungen:
- DE-A1- 10 125 987
- US-A- 4 890 877
- US-A1- 2002 070 584

## Beschreibung

Die Erfindung betrifft einen Stoßabsorber aus einem Faserwerkstoff und eine Kraftfahrzeugtür mit einem solchen Stoßabsorber sowie ein Verfahren zur Herstellung eines Stoßabsorbers.

Aus dem Stand der Technik sind verschiedene Stoßabsorber zum Schutz gegen einen Seitenaufprall auf ein Kraftfahrzeug bekannt. Solche Stoßabsorber werden auch als Energieabsorptionskörper bezeichnet. Üblicherweise bestehen Energieabsorptionskörper aus einem Polyurethanschaum (PU), aus expandiertem Polypropylen (EPP) oder aus Polystyrol (PS).

Aus der EP 0 683 072 B1 ist ein Stoßabsorber aus einem formstabil verpresstem Faserwerkstoff bekannt geworden. Dieser Stoßabsorber hat die Form einer Stufenpyramide, wobei die einzelnen Pyramidenstufen jeweils Scherzonen ausbilden.

Aus der DE 44 17 835 A1 ist ein Stoßabsorber bekannt, der in Form eines Pralltopfes ausgebildet ist, bei dem eine Energieabsorption über eine Mehrzahl von beim Aufprall zeitlich aufeinanderfolgenden Schervorgängen des Absorbermaterials erfolgt. Insbesondere hat der Stoßabsorber hier die Form einer Terrassenanordnung oder einer Stufenpyramide.

Aus der DE 699 12 789 T2 ist ferner ein Absorber für Kraftfahrzeug-Stoßstangen und Kraftfahrzeugauskleidungen bekannt, der aus natürlichem oder künstlichem Harzmaterial oder Verbundmaterial hergestellt ist. Eine Energieabsorption erfolgt hierbei mittels einer Mehrzahl tassenförmiger Zellen, die eine dünnwandige Konstruktion mit kreisförmigem Querschnitt haben.

Aus der DE 101 25 987 A1 ist eine Seitenwand mit Seitenwandaufprallschutzmitteln in einem Fahrzeug bekannt. Hierin wird ein Deformationselement beschrieben, welches ein Deformationsprofil aufweist, das an seinen Längsseiten mindestens zwei in Fahrzeuglängsrichtung verlaufende Stufen hat.

Aus der DE 296 07 664 U1 ist weiterhin eine Fahrzeugtür mit einem Aggregatträger bekannt, der zusammen mit Funktionselementen, wie z.B. Fensterheber, Türverriegelung, Lautsprecher und Kabel eine komplett montierte modulare Einbaueinheit bildet. Der Aggregatträger wird hierbei aus einem formsteifen Faserverbundwerkstoff gefertigt, der über eine vergrößerte innere Reibung und eine erhöhte Schlagzähigkeit aufweist und somit eine verstärkte Energieabsorption im Falle eines Seitenaufpralls gewährleistet.

US 2002/0070584 A1 die als nächstliegender Stand der Technik betrachtet wird, offenbart einen Energie-Absorber bestehend aus einer Vielzahl von Vorsprüngen, welche sich von einer Basisfläche aus erstrecken.

Der Erfindung liegt die Aufgabe zugrunde, einen Stoßabsorber insbesondere zum Einbau in eine Kraftfahrzeugtür aus einer Faserwerkstoff zu schaffen, der einen verbesserten Seitenaufprallschutz für die Fahrzeuginsassen bietet.

Diese Aufgabe wird mit den Merkmalen des unabhängigen Patentanspruchs 1 gelöst. Bevorzugte Ausführungsformen der Erfindung sind in den abhängigen Patentansprüchen angegeben.

Es wird ein Stoßabsorber zum Schutz gegen einen Seitenaufprall auf ein Kraftfahrzeug geschaffen. Der Stoßabsorber besteht aus einem Faserwerkstoff und hat ein Querschnittsprofil mit zumindest ersten, zweiten, dritten und vierten Flanken, wobei zwei aufeinander folgende der Flanken jeweils in gegenläufige Richtungen verlaufen. Die Flanken gehen hierbei von einer Basis-Ebene mit einem Winkel von 25 - 90 Grad aus und bilden ein oberes, verglichen mit der Basis-Ebene kleineres Plateau. Dieses Plateau weist zumindest zwei Einbuchtungen auf, die im Wesentlichen bis zur Basis-Ebene reichen.

Aufgrund dieser Struktur des Stoßabsorbers können auch hohe Seitenaufprallkräfte aufgenommen werden, die erst bei einer Last von zum Beispiel über 3 000 Newton zu einem Zusammendrücken des Stoßabsorbers führen.

Nach einer bevorzugten Ausführungsform der Erfindung wird ein Naturfaserformstoff, vorzugsweise ein Holzfaserwerkstoff, zur Herstellung des Stoßabsorbers verwendet. Vorzugsweise wird hierzu eine Holzfasermatte durch Pressen oder Tiefziehen in die gewünschte Form gebracht. Die Verwendung eines Holzfaserwerkstoffs ist besonders vorteilhaft, da sich auch bei Deformation und Zusammendrücken des Stoßabsorbers bei einem Seitenaufprall keine scharfen Kanten ausbilden. Aufgrund der Materialeigenschaften des Holzfaserwerkstoffs wird vielmehr der Stoßabsorber ähnlich wie ein Karton zusammengedrückt und gefaltet, um die Stoßenergie aufzunehmen.

Nach einer Ausführungsform der Erfindung hat die erste Flanke, das heißt die Außenwand des Stoßabsorbers, einen Neigungswinkel zwischen 25 bis 90 Grad, vorzugsweise zwischen 30 und 75 Grad, insbesondere ca. 45 Grad zur Basis-Ebene.

Nach einer weiteren Ausführungsform der Erfindung sind die Innenradien, insbesondere die Innenradien von aufeinander stoßenden Flanken, möglichst groß gewählt, und betragen mindestens 5 Millimeter, vorzugsweise mindestens 10 Millimeter, um das Auftreten von Spannungsspitzen an den Innenradien bei Belastung des Stoßabsorbers zu begrenzen.

Nach einer bevorzugten Ausführungsform der Erfindung hat der Faserwerkstoff, nachdem er durch Heißpressung oder durch Tiefziehen auf seine gewünschte Form gebracht worden ist, eine Dicke von 1 bis 3 Millimetern, vorzugsweise ca. 1,8 Millimetern.

Nach einer weiteren Ausführungsform der Erfindung umschreibt der Stoßabsorber eine Basis-Fläche mit einer Kantenlänge zwischen 20 und 40 Zentimetern, vorzugsweise eine quadratische Fläche mit ca. 30 Zentimetern Kantenlänge.

Nach einer weiteren Ausführungsform der Erfindung hat der Stoßabsorber eine Höhe zwischen 2 und 8 Zentimeter, vorzugsweise ca. 6 Zentimetern.

Nach einer weiteren Ausführungsform der Erfindung hat der Stoßabsorber zumindest eine Einbuchtung. Die Einbuchtung kann verschiedenste Querschnittsprofile aufweisen, wie zum Beispiel im Wesentlichen kreisförmige, dreieckige, viereckige, polygonförmige oder andere Profilformen.

Nach einer weiteren Ausführungsform der Erfindung hat der Stoßabsorber beispielsweise zwei oder vier Einbuchtungen. Vorzugsweise verläuft ein Steg zwischen zwei benachbarten Einbuchtungen. Je nach der gewünschten Steifigkeit des Stoßabsorbers kann der Steg im Wesentlichen parallel zu der Basis-Ebene des Stoßabsorbers oder gekrümmt, insbesondere konkav zur Basis-Ebene, verlaufen. Dieser konkav gekrümmte Steg gibt dem Energieabsorptionskörper ein geringeres Kraftniveau im Unterschied zu dem Energieabsorptionskörper ohne abgesenkten Steg.

Gemäß der Erfindung reicht die Einbuchtung bis auf die Basis-Ebene. Dies hat den Vorteil, dass sich die Einbuchtung bei einem Seitenaufprall, auch zum Beispiel auf der Innenseite der Fahrzeugtür abstützen kann, sodass der Stoßabsorber erst bei relativ hohen Seitenaufprallkräften irreversibel deformiert wird.

Nach einer weiteren Ausführungsform der Erfindung befindet sich in der Einbuchtung eine Aufwölbung oder Ausbuchtung. Vorzugsweise reicht die Ausbuchtung bis auf die Höhe des Stoßabsorbers, sodass sich ein Abstützungseffekt auf der gegenüberliegenden Innenseite der Kraftfahrzeugtür bei einem Seitenaufprall ergibt.

In einem weiteren Aspekt betrifft die Ereindung eine Kraftfahrzeugtür mit einem Außenblech und einer Innenverkleidung. Zwischen dem Außenblech und der Innenverkleidung befindet sich ein erfindungsgemäßer Stoßabsorber. Dieser ist vorzugsweise so angeordnet, dass dessen Basis-Ebene im Wesentlichen in vertikaler Richtung verläuft. Ferner ist die Basis-Ebene vorzugsweise gegenüber der Innenverkleidung angeordnet, sodass die Einbuchtung in Richtung auf das Fahrzeuginnere verläuft.

Der hier vorgeschlagene Energieabsorptionskörper kann in allen denkbaren Bereichen zum Schutz von Fahrzeuginsassen eingesetzt werden (Hüfte, Thorax, Abdomen, Kopf (Verkleidungsteile), Knie, etc.

Nach einer weiteren Ausführungsform besteht der Stoßabsorber aus einer Naturfasermatte. Diese kann einlagig oder mehrlagig sein.

Zur Herstellung eines Stoßabsorbers wird eine Fasermatte in ein Werkzeug eingelegt, das ein Querschnittsprofil mit zumindest ersten, zweiten, dritten und vierten Flanken aufweist, wobei zwei aufeinander folgende der Flanken jeweils in gegenläufige Richtungen verlaufen. Durch Zusammenfahren des Werkzeugs wird die Fasermatte durch Heißpressen oder Tiefziehen auf die gewünschte Form gebracht. Vorzugsweise hat die Fasermatte eine Beimischung, zum Beispiel eine Polypropylenbeimischung mit Harz, zur Verklebung der Fasern, sodass die Fasermatte aufgrund der Verklebung eine formstabile Form erhält.

Im Weiteren werden bevorzugte Ausführungsformen der Erfindung mit Bezugnahme auf die Zeichnungen näher erläutert. Es zeigen:
- Figur 1: eine perspektivische Ansicht eines Stoßabsorbers mit einer zylinderförmigen Einbuchtung,
- Figur 2: eine perspektivische Ansicht eines Stoßabsorbers mit zwei dreieckförmigen Einbuchtungen,
- Figur 3: eine perspektivische Ansicht eines Stoßabsorbers mit vier Einbuchtungen, die jeweils einen Polygon-Querschnitt aufweisen,
- Figur 4: eine perspektivische Ansicht eines Stoßabsorbers mit einer Aufwölbung in der Einbuchtung,
- Figur 5: eine perspektivische eines Stoßabsorbers mit zwei pyramidenförmigen Einbuchtungen,
- Figur 6: eine Draufsicht auf den Stoßabsorber der Figur 5 sowie eine Ansicht eines Querschnitts,
- Figur 7: eine weitere perspektivische Darstellung des Stoßabsorbers der Figuren 5 und 6,
- Figur 8: einen Teil eines Werkzeugs zum Heißverpressen einer Fasermatte zur Herstellung des Stoßabsorbers der Figuren 5, 6 und 7,
- Figur 9: das Werkzeug der Figur 8 mit einer aufgelegten Fasermatte vor dem Pressvorgang,
- Figur 10: die entlang eines Stegs des Stoßabsorbers aufgeschnittene Fasermatte nach dem Pressvorgang,
- Figur 11: eine alternative Ausführungsform des Stoßabsorbers der Figuren 5, 6 und 7 mit einem gekrümmten Steg sowie eine Schnittansicht.
- Figur 12: eine schematische Ansicht einer Kraftfahrzeugtür.

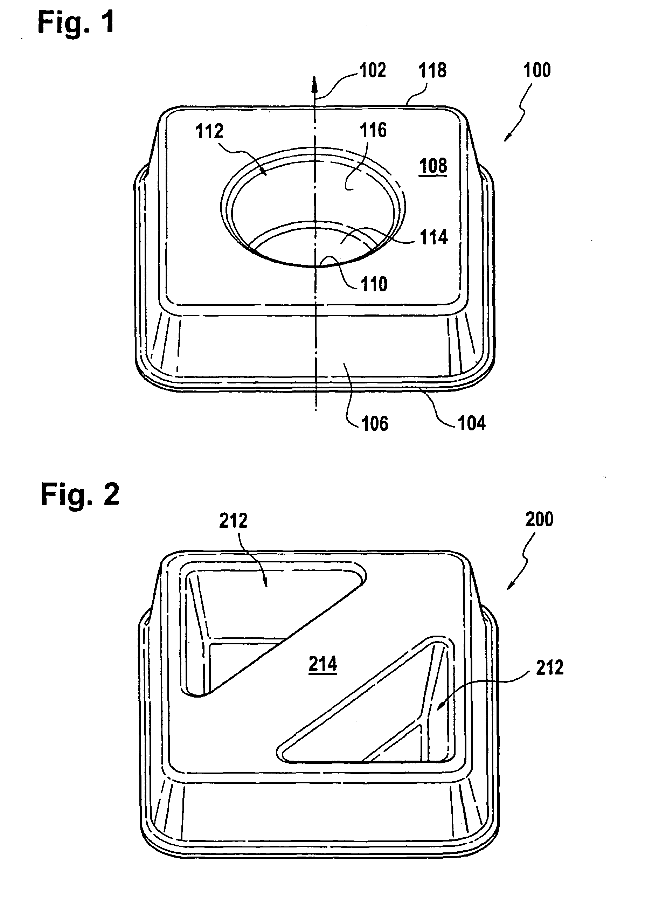

Die Figur 1 zeigt einen Stoßabsorber 100, der aus einem Faserwerkstoff besteht, und der entlang zum Beispiel seines Querschnitts 102 eine in verschiedene Richtungen verlaufende Wandung hat.

Von einer Basis 104 des Stoßabsorbers 100 ausgehend, verläuft die Wandung - dem Querschnitt 102 in Pfeilrichtung folgend - in dem äußeren Wandungsbereich 106 mit einer nach oben ansteigenden Flanke. Nach Erreichen des oberen Plateaus 108 der Wandung fällt die Wandung entlang eines inneren Wandungsbereich 110 in einer im Wesentlichen zylinderförmigen Einbuchtung 112 bis auf den Boden 114 der Wandung ab.

Von dem Boden 114 ausgehend steigt die Wandung entlang des Querschnitts 102 entlang des inneren Wandungsbereichs 116, der dem inneren Wandungsbereich 110 gegenüber liegt, wieder bis auf das obere Plateau 108 auf. Von dort fällt die Wandung entlang ihres dem äußeren Wandungsbereich 106 gegenüberliegenden äußeren Wandungsbereichs 118 wieder bis auf die Basis 104 ab.

Durch die entlang des Querschnitts 102 aufeinander folgenden äußeren Wandungsbereich 106, den inneren Wandungsbereich 110, den inneren Wandungsbereich 116 und den äußeren Wandungsbereich 118 werden also vier aufeinander folgende Flanken geschaffen. Je zwei aufeinander folgende Flanken verlaufen dabei jeweils in gegenläufige Richtung.

Beispielsweise verläuft der äußere Wandungsbereich 106 schräg nach oben, während der innere Wandungsbereich 110 senkrecht nach unten verläuft. Der äußere Wandungsbereich 106 und der innere Wandungsbereich 110 verlaufen also in gegenläufige Richtungen. Genauso verhält es sich mit dem inneren Wandungsbereich 110 und dem inneren Wandungsbereich 116, der im Wesentlichen senkrecht nach oben, also gegenläufig zu dem inneren Wandungsbereich 110 verläuft.

Ebenso verhält es sich hinsichtlich des inneren Wandungsbereichs 116 und des darauf folgenden äußeren Wandungsbereichs 118, der schräg nach unten, also gegenläufig zu dem senkrecht aufsteigenden inneren Wandungsbereich 116 verläuft. Der Stoßabsorber 100 hat also entlang seines Querschnitts 102 ein zickzackartig verlaufendes Querschnittsprofil, in dem abwechselnd aufsteigende und absteigende Flanken vorkommen.

Dies hat den Vorteil, dass der Stoßabsorber 100 eine relativ große mechanische Stabilität aufweist. Bei Beaufschlagung des Stoßabsorbers mit einer relativ geringen Seitenaufprallkraft wird der Stoßabsorber 100 daher zunächst nur elastisch verformt. Erst bei großen Seitenaufprallkräften wird der Stoßabsorber 100 irreversibel zusammengedrückt und gefaltet.

Besonders vorteilhaft ist dabei, wenn sich der Boden 114 in etwa auf derselben Ebene wie die Basis 104 befindet. Dies vergrößert die Aufstandsfläche des Stoßabsorbers 100 und damit dessen Fähigkeit, den Seitenaufprallkräften standzuhalten.

Bevorzugter Weise besteht der Stoßabsorber 100 aus einem Holzfaserwerkstoff. Dies hat den Vorteil, dass auch bei einer Zusammenfaltung des Stoßabsorbers 100 bei Beaufschlagung mit einer Seitenaufprallkraft keine scharfen oder herausstehenden Kanten ausgebildet werden. Entsprechend gering ist die Gefahr von Sekundärverletzungen.

Zur Verbesserung der Herstellbarkeit werden die Innenradien möglichst groß gewählt, beispielsweise 5mm, vorzugsweise größer als 10 mm.

Die Neigungswinkel der äußeren Wandungsbereiche 104 und 118 können in einem weiten Bereich variiert werden. Zum Beispiel kann ein Neigungswinkungswinkel des äußeren Wandungsbereichs 106 mit Bezug auf die Basis 104 in dem Bereich zwischen 25 bis 90 Grad, vorzugsweise zwischen 30 und 75 Grad, insbesondere ca. 45 Grad gewählt werden. In dem hier betrachteten Ausführungsbeispiel der Figur 1 beträgt der Neigungswinkel, der durch den äußeren Wandungsbereich 106 gebildeten Flanke, ca. 60 Grad zu der Basis-Ebene des Stoßabsorbers.

Die Figur 2 zeigt eine weitere Ausführungsform eines Stoßabsorbers 200. Der Stoßabsorber 200 ist ähnlich strukturiert wie der Stoßabsorber 100. Im Gegensatz zu dem Stoßabsorber 100 hat der Stoßabsorber 200 zwei Einbuchtungen 212, die jeweils einen dreieckförmigen Querschnitt aufweisen. Auch die Einbuchtungen 212 erstrecken sich vorzugsweise bis auf die Basis-Ebene des Stoßabsorbers 200.

Zwischen den Einbuchtungen 212 befindet sich ein Quersteg 214 auf dem oberen Plateau des Stoßabsorbers 200.

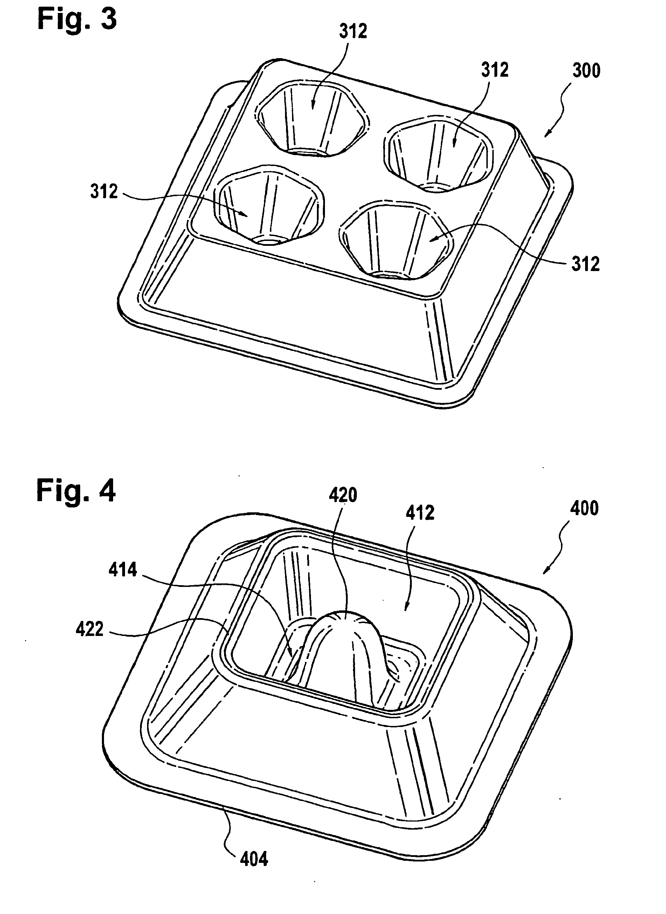

Die Figur 3 zeigt eine weitere Ausführungsform eines Stoßabsorbers 300, der wiederum ähnlich wie die Stoßabsorber 100 und 200 der Figuren 1 bzw. 2 strukturiert ist. Der Stoßabsorber 300 hat vier Einbuchtungen 312, die jeweils einen polygonförmigen Querschnitt aufweisen.

Die Figur 4 zeigt eine weitere Ausführungsform eines Stoßabsorbers 400, der ähnlich wie die Stoßabsorber 100, 200 und 300 der Figuren 1, 2 bzw. 3 strukturiert ist. Der Stoßabsorber 400 hat eine Einbuchtung 412 mit im Wesentlichen quadratischem Querschnitt. Der Boden 414 der Einbuchtung 412 reicht vorzugsweise bis auf die Ebene der Basis 404 des Stoßabsorbers 400. Der Boden 414 umrandet eine Ausbuchtung 420, die sich von dem Boden 414 vorzugsweise bis zur Höhe des Scheitels 422 des Stoßabsorbers 400 erhebt.

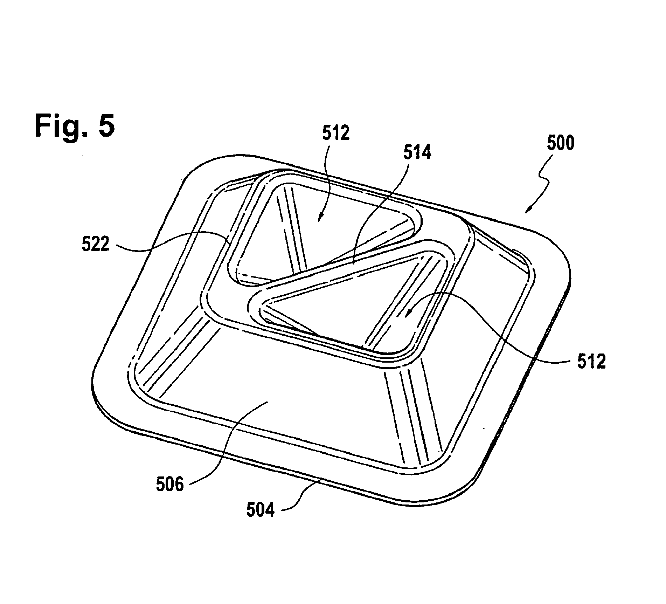

Die Figur 5 zeigt einen weiteren Stoßabsorber 500, der wiederum ähnlich wie die Stoßabsorber 100, 200, 300 und 400 der Figuren 1, 2, 3 bzw. 4 strukturiert ist.

Der Stoßabsorber 500 hat zwei pyramidenförmige Einbuchtungen 512, wobei die Spitzen der pyramidenförmigen Einbuchtungen 512 vorzugsweise bis auf die von der Basis 504 des Stoßabsorbers 500 aufgespannte Ebene reichen. In dem hier betrachteten Ausführungsbeispiel haben die Einbuchtungen 512 jeweils die Form eines Tetraeders, jedoch sind auch andere Pyramidenformen möglich. Zwischen den beiden Einbuchtungen 512 befindet sich ein Quersteg 514. Dieser verläuft vorzugsweise auf Höhe des Scheitels 522 und damit parallel zu der Basis-Ebene des Stoßabsorbers 500.

Der äußere Wandungsbereich 506 des Stoßabsorbers 500 hat vorzugsweise einen Neigungswinkel von ca. 45 Grad zur Basis-Ebene, die von der Basis 504 aufgespannt wird.

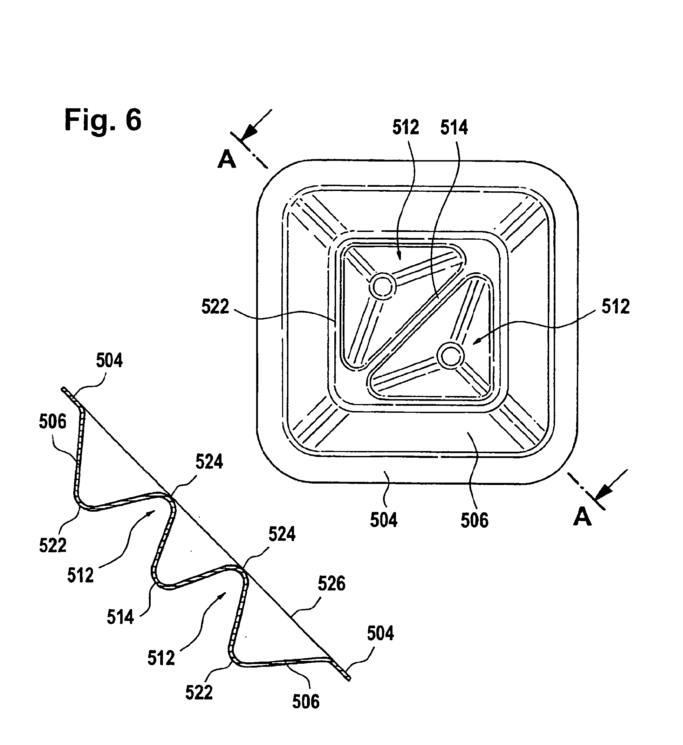

Die Figur 6 zeigt eine Draufsicht auf den Stoßabsorber 500 der Figur 5, sowie eine Schnittansicht entlang des Schnitts A-A. Wie aus der Figur 6 ersichtlich, reichen die Pyramidenspitzen 524 der tetraederförmigen Einbuchtungen 512 bis auf die von der Basis 506 des Stoßabsorbers 500 aufgespannte Basis-Ebene 526.

Die Basis 506 des Stoßabsorbers 500 hat vorzugsweise eine Kantenlänge zwischen 20 und 40 Zentimetern, insbesondere ca. 30 Zentimeter. Die Höhe des Stoßabsorbers 500 von der Basis-Ebene 526 bis zu dem Scheitel 522 beträgt vorzugsweise zwischen 4 und 10 Zentimeter, insbesondere ca. 6 Zentimeter.

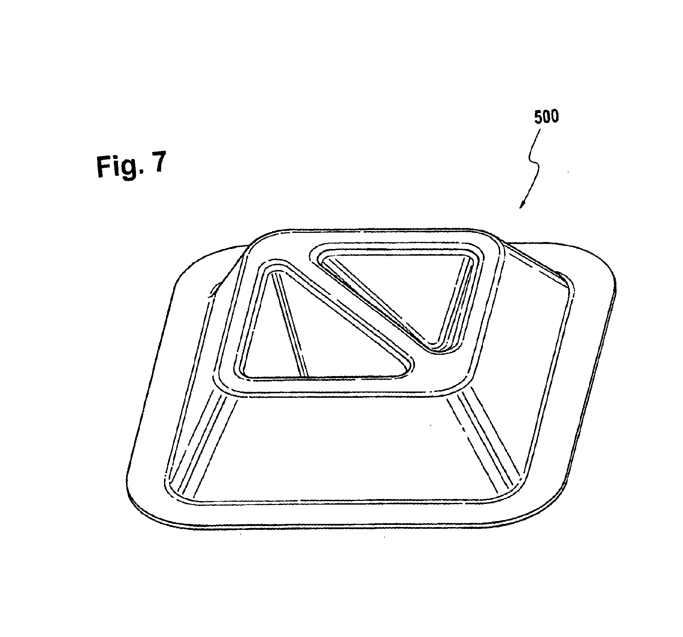

Die Figur 7 zeigt den Stoßabsorber der Figuren 5 und 6 in einer weiteren perspektivischen Darstellung.

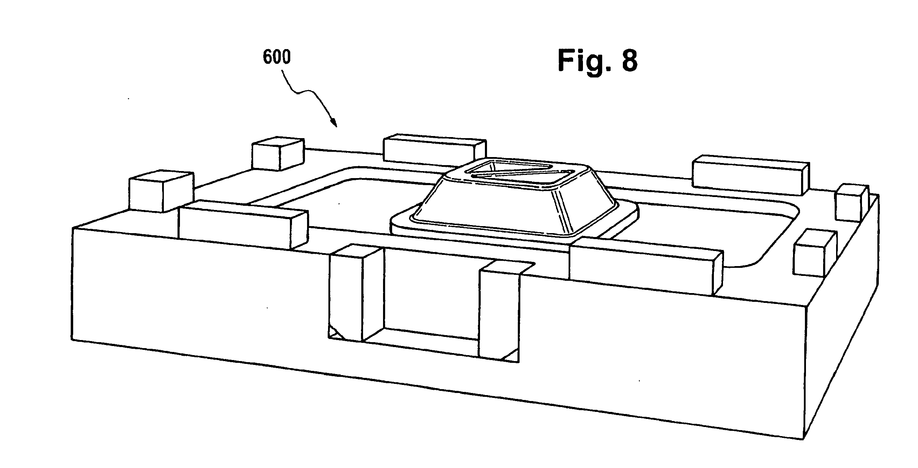

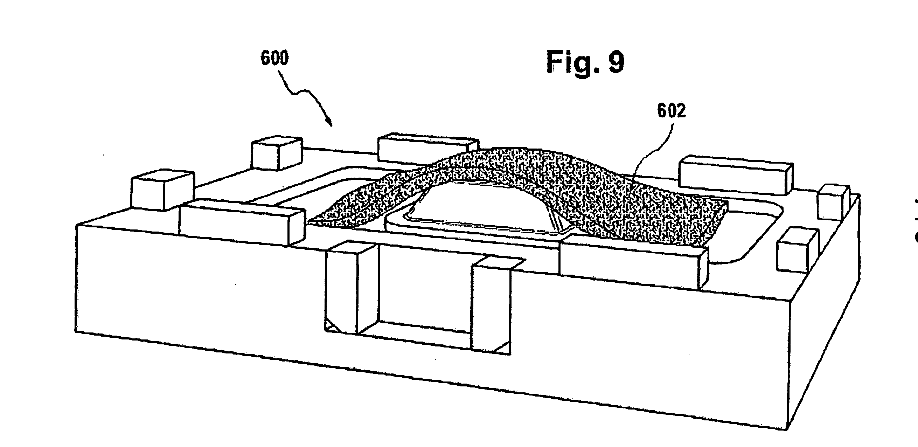

Die Figur 8 zeigt einen Teil eines Werkzeugs 600, welches zur Herstellung des Stoßabsorbers 500, wie er in den Figuren 5, 6 und 7 dargestellt ist, verwendet werden kann. Dazu hat das Werkzeug 600 die für die Form des Stoßabsorbers 500 gewünschte Innenkontur. Zur Herstellung es Stoßabsorbers 500 wird eine Fasermatte 602 auf das Werkzeug 600 gelegt, wie in der Figur 9 dargestellt. Die Fasermatte besteht vorzugsweise aus Holzfasern, in die Polypropylen gemischt ist.

Die Fasermatte 602 wird durch Heißpressen mittels des Werkzeugs 600 auf die gewünschte Form gebracht.

Der Press- oder Tiefziehvorgang erfolgt beispielsweise bei einer Werkzeugtemperatur von 220°C, 60 bar Anpressdruck und einer Presszeit von ca. 20 Sekunden.

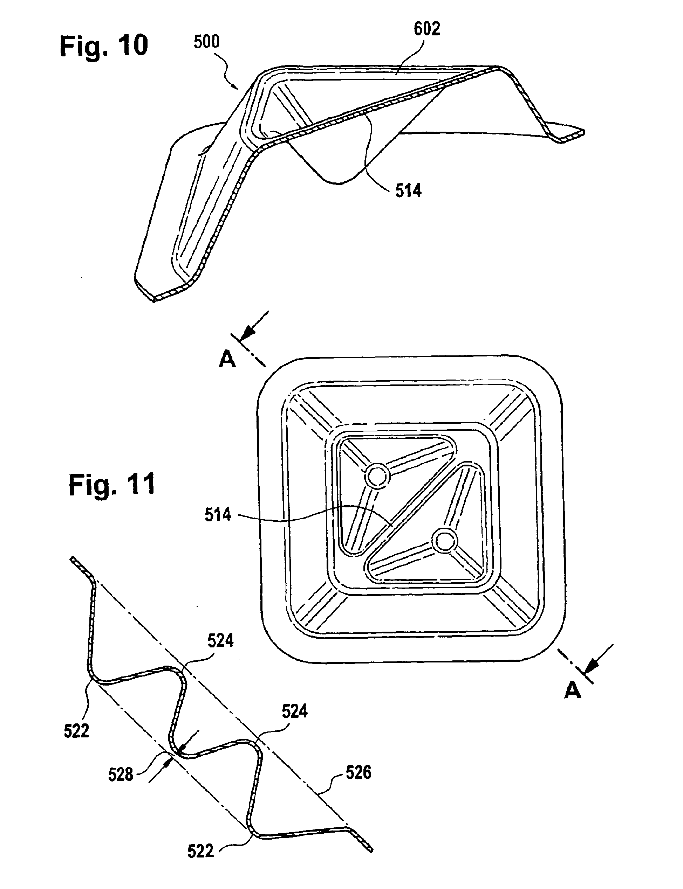

Die Figur 10 zeigt die gepresste Fasermatte 602, welche entlang des Querstegs 514 zu Demonstrationszwecken zerschnitten worden ist.

Die Figur 11 zeigt eine Draufsicht auf eine alternative Ausführungsform des Stoßabsorbers 500. Im Unterschied zu der Ausführungsform der Figuren 5, 6, 7 und 10 hat der Stoßabsorber 500 der Figur 11 einen mit Bezug auf die Basis-Ebene 526 konkav gekrümmten Steg 514. In seiner Mitte ist der Steg 514 daher einen Abstand 528 tiefer als die Scheitel 522.

Im Unterschied zu der Ausführungsform der Figur 6 reichen die Pyramidenspitzen 524 nicht ganz bis an die Basis-Ebene 526 heran.

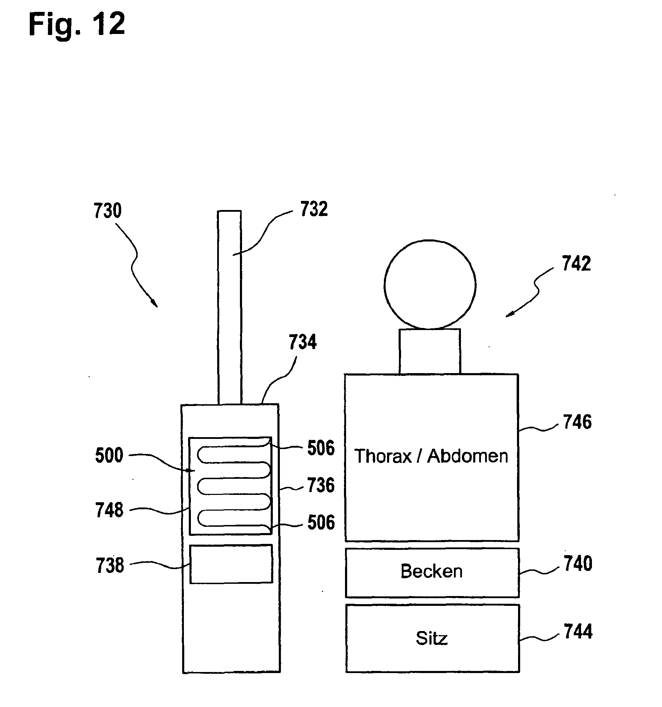

Die Figur 12 zeigt schematisch eine Ausführungsform einer erfindungsgemäßen Kraftfahrzeugtür 730. Die Kraftfahrzeugtür 730 hat ein Fenster 732. Unterhalb einer Türbrüstung 734 befindet sich ein erfindungsgemäßer Stoßabsorber, wie zum Beispiel der Stoßabsorber 500. Die von der Basis 506 des Stoßabsorbers 500 aufgespannte Basisebene liegt dabei gegenüber einem Innenverkleidungsteil 736 der Kraftfahrzeugtür 730, sodass also die Basisebene im Wesentlichen in vertikaler Richtung verläuft.

Unterhalb des Stoßabsorbers 500 befindet sich ein Stoßabsorber 738. Beispielsweise besteht der Stoßabsorber 738 aus Polyurethanschaum und hat eine höhere Steifigkeit als der Stoßabsorber 500. Bei dem Stoßabsorber 738 kann es sich aber auch um eine entsprechend hart dimensionierte Ausführungsform eines erfindungsgemäßen Stoßabsorbers handeln.

Der Stoßabsorber 738 ist in etwa auf der Höhe eines Beckens 740 einer Person 742, die auf dem Fahrzeugsitz 744 Platz genommen hat, angeordnet. Der oberhalb des Stoßabsorbers 738 angeordnete Stoßabsorber 500 befindet sich dagegen in etwa auf Höhe von Thorax und/oder Abdomen 746 der Person 742. Zwischen einem Außenblech 748 der Tür 730 und einem Innenverkleidungsteil 736 der Tür 730 sind also die Stoßabsorber 500 und 738 übereinander angeordnet.

Im Falle eines Seitenaufpralls hat dies den Vorteil, dass die Person 742 zunächst durch den Stoßabsorber 738 weg von der sich verformenden Kraftfahrzeugtür 730 in Richtung auf die Fahrzeugmitte bewegt wird. Bei weiterer Verformung der Kraftfahrzeugtür 730 schützt dann der Stoßabsorber 500 vor allem den Thorax/Abdomen 746 der Person 742 vor schweren Verletzungen.

### Bezugszeichenliste

- 100: Stoßabsorber
- 102: Querschnitt
- 104: Basis
- 106: Äußerer Wandungsbereich
- 108: Oberes Plateau
- 110: Innerer Wandungsbereich
- 112: Zylinderförmige Einbuchtung
- 114: Boden
- 116: Innerer Wandungsbereich
- 118: Äußerer Wandungsbereich
- 200: Stoßabsorber
- 212: Einbuchtung
- 214: Quersteg
- 300: Stoßabsorber
- 312: Einbuchtung
- 400: Stoßabsorber
- 404: Basis
- 412: Einbuchtung
- 414: Boden
- 420: Ausbuchtung
- 422: Scheitel
- 500: Stoßabsorber
- 504: Basis
- 506: Äußerer Wandungsbereich
- 512: Einbuchtung
- 514: Quersteg
- 522: Scheitel
- 524: Pyramidenspitze
- 526: Basis-Ebene
- 528: Abstand
- 600: Werkzeug
- 602: Fasermatte
- 730: Kraftfahrzeugtür
- 732: Fenster
- 734: Türbrüstung
- 736: Innenverkleidungsteil
- 738: Stoßabsorber
- 740: Becken
- 742: Person
- 744: Fahrzeugsitz
- 746: Thorax/Abdomen
- 748: Außenblech

## Patentansprüche

1. Stoßabsorber zum Schutz gegen einen Seitenaufpralls auf ein Kraftfahrzeug aus einem Faserwerkstoff mit einem Querschnittsprofil (102), welches zumindest erste, zweite, dritte und vierte Flanken (106, 110, 116, 118) aufweist die von einer Basis-Ebene mit einem Winkel von 25 - 90 Grad ausgehen, wobei zwei aufeinander folgende Flanken jeweils in gegenläufige Richtungen verlaufen, wobei sich an den Flanken ein einziges oberes zur Basis-Ebene kleineres Plateau anschließt, **dadurch gekennzeichnet, dass** das Plateau zumindest zwei Einbuchtungen (112; 212; 312; 412; 512) aufweist, die bis zur Basis-Ebene reichen.

2. Stoßabsorber nach Anspruch 1, **dadurch gekennzeichnet, dass** es sich bei dem Faserwerkstoff um einen Holzfaserwerkstoff handelt.

3. Stoßabsorber nach Anspruch 1 oder 2, **dadurch gekennzeichnet, dass** der Neigungswinkel zwischen der ersten Flanke und der Basisebene einen Winkel von insbesondere 30 - 70 Grad, vorzugsweise ca. 45 Grad einschließt.

4. Stoßabsorber nach Anspruch 1, 2 oder 3, **dadurch gekennzeichnet, dass** die inneren Radien größer als 5 Millimeter, vorzugsweise größer als 10 Millimeter sind.

5. Stoßabsorber nach einem der vorhergehenden Ansprüche, **dadurch gekennzeichnet, dass** der Faserwerkstoff eine Dicke zwischen 1 und 3 Millimeter, vorzugsweise ca. 1,8 Millimeter aufweist.

6. Stoßabsorber nach einem der vorhergehenden Ansprüche, **dadurch gekennzeichnet, dass** der Stoßabsorber eine Höhe von 4 bis 10 Zentimeter, vorzugsweise ca. 6 Zentimeter, aufweist.

7. Stoßabsorber nach einem der vorhergehenden Ansprüche, **dadurch gekennzeichnet, dass** die Basis-Ebene eine Basis-Fläche mit einer Kantenlänge von 20 bis 40 Zentimeter, vorzugsweise ca. 30 Zentimeter aufweist.

8. Stoßabsorber nach einem der vorhergehenden Ansprüche, **dadurch gekennzeichnet, dass** die Einbuchtung ein im Wesentlichen kreisförmiges, dreieckiges, viereckiges oder polygonförmiges Profil aufweist.

9. Stoßabsorber nach einem der vorhergehenden Ansprüche, **dadurch gekennzeichnet, dass** sich ein Steg (214; 514) zwischen zwei Einbuchtungen befindet.

10. Stoßabsorber nach Anspruch 9, **dadurch gekennzeichnet, dass** der Steg im Wesentlichen parallel zu einer Basis-Ebene (526) des Stoßabsorbers verläuft.

11. Stoßabsorber nach Anspruch 9, **dadurch gekennzeichnet, dass** der Steg gekrümmt verläuft.

12. Stoßabsorber nach Anspruch 11, **dadurch gekennzeichnet, dass** die Krümmung des Stegs mit Bezug auf die Basis-Ebene konkav ist.

13. Stoßabsorber nach einem der vorhergehenden Ansprüche **dadurch gekennzeichnet, dass** die Einbuchtung eine Ausbuchtung (420) aufweist.

14. Stoßabsorber nach einem der vorhergehenden Ansprüche, **dadurch gekennzeichnet, dass** der Faserwerkstoff aus einer einzigen Fasermatte (602) oder aus zwei oder mehreren übereinanderliegenden Fasermatten besteht.

15. Stoßabsorber nach einem der vorhergehenden Ansprüche, **dadurch gekennzeichnet, dass** es sich bei der Fasermatte um eine Naturfasermatte handelt.

16. Kraftfahrzeugtür mit
- einer äußeren Begrenzung (748),
- einer Innenverkleidung (736) und
- einem zwischen der äußeren Begrenzung und der Innenverkleidung angeordneten Stoßabsorber nach einem der vorhergehenden Ansprüche 1 bis 15.

17. Kraftfahrzeugtür nach Anspruch 16, wobei der erste Stoßabsorber so angeordnet ist, dass dessen Basis-Ebene vertikal verläuft.

18. Kraftfahrzeugtür nach Anspruch 16 oder 17, wobei der Stoßabsorber so angeordnet ist, dass dessen Basis-Ebene der Innenverkleidung gegenüberliegt.

19. Kraftfahrzeugtür nach Anspruch 16, 17 oder 18, wobei der zweite Stoßabsorber (738) unterhalb des ersten Stoßabsorbers angeordnet ist, wobei der zweite Stoßabsorber eine höhere Steifigkeit als der erste Stoßabsorber aufweist.

## Claims

1. Shock absorber for protecting against a side impact against a motor vehicle, composed of a fibre material and having a cross-sectional profile (102) which has at least first, second, third and fourth flanks (106, 110, 116, 118) which extend from a base plane at an angle of 25 - 90 degrees, with two successive flanks running in each case in opposite directions, with the flanks being adjoined by a single upper plateau which is smaller than the base plane, **characterized in that** the plateau has at least two indentations (112; 212; 312; 412; 512) which extend as far as the base plane.

2. Shock absorber according to Claim 1, **characterized in that** the fibre material is a wood fibre material.

3. Shock absorber according to Claim 1 or 2, **characterized in that** the angle of inclination between the first flank and the base plane encloses an angle of in particular 30 - 70 degrees, preferably approximately 45 degrees.

4. Shock absorber according to Claim 1, 2 or 3, **characterized in that** the inner radii are greater than 5 millimetres, preferably greater than 10 millimetres.

5. Shock absorber according to one of the preceding claims, **characterized in that** the fibre material has a thickness of between 1 and 3 millimetres, preferably approximately 1.8 millimetres.

6. Shock absorber according to one of the preceding claims, **characterized in that** the shock absorber has a height of 4 to 10 centimetres, preferably approximately 6 centimetres.

7. Shock absorber according to one of the preceding claims, **characterized in that** the base plane has a base surface with an edge length of 20 to 40 centimetres, preferably approximately 30 centimetres.

8. Shock absorber according to one of the preceding claims, **characterized in that** the indentation has a substantially circular, triangular, square or polygonal profile.

9. Shock absorber according to one of the preceding claims, **characterized in that** a web (214; 514) is situated between two indentations.

10. Shock absorber according to Claim 9, **characterized in that** the web runs substantially parallel to a base plane (526) of the shock absorber.

11. Shock absorber according to Claim 9, **characterized in that** the web runs in a curved manner.

12. Shock absorber according to Claim 11,
**characterized in that** the curvature of the web is concave in relation to the base plane.

13. Shock absorber according to one of the preceding claims, **characterized in that** the indentation has a convexity (420).

14. Shock absorber according to one of the preceding claims, **characterized in that** the fibre material is composed of a single fibre mat (602) or of two or more fibre mats situated one on top of the other.

15. Shock absorber according to one of the preceding claims, **characterized in that** the fibre mat is a natural fibre mat.

16. Motor vehicle door having
- an outer boundary (748),
- an inner lining (736) and
- a shock absorber according to one of the preceding Claims 1 to 15 arranged between the outer boundary and the inner lining.

17. Motor vehicle door according to Claim 16, with the first shock absorber being arranged such that its base plane runs vertically.

18. Motor vehicle door according to Claim 16 or 17, with the shock absorber being arranged such that its base plane is situated opposite the inner lining.

19. Motor vehicle door according to Claim 16, 17 or 18, with the second shock absorber (738) being arranged below the first shock absorber, with the second shock absorber having a higher rigidity than the first shock absorber.

## Revendications

1. Pare-chocs pour la protection contre une collision latérale contre un véhicule, constitué d'un matériau fibreux ayant un profilé en section transversale (102) qui présente au moins des premier, deuxième, troisième et quatrième flancs (106, 110, 116, 118), qui partent d'un plan de base avec un angle de 25 à 90 degrés, deux flancs successifs s'étendant à chaque fois dans des directions opposées, un unique plateau plus petit, supérieur par rapport au plan de base, se raccordant aux flancs, **caractérisé en ce que** le plateau présente au moins deux renfoncements (112 ; 212 ; 312 ; 412 ; 512), qui s'étendent jusqu'au plan de base.

2. Pare-chocs selon la revendication 1, **caractérisé en ce que** le matériau fibreux est un matériau à base de fibre de bois.

3. Pare-chocs selon la revendication 1 ou 2, **caractérisé en ce que** l'angle d'inclinaison entre le premier flanc et le plan de base forme un angle d'environ 30 à 70 degrés, de préférence d'environ 45 degrés.

4. Pare-chocs selon la revendication 1, 2 ou 3, **caractérisé en ce que** les rayons intérieurs sont supérieurs à 5 mm, de préférence supérieurs à 10 mm.

5. Pare-chocs selon l'une quelconque des revendications précédentes, **caractérisé en ce que** le matériau fibreux présente une épaisseur comprise entre 1 et 3 mm, de préférence d'environ 1,8 mm.

6. Pare-chocs selon l'une quelconque des revendications précédentes, **caractérisé en ce que** le pare-chocs présente une hauteur de 4 à 10 cm, de préférence d'environ 6 cm.

7. Pare-chocs selon l'une quelconque des revendications précédentes, **caractérisé en ce que** le plan de base présente une surface de base ayant une longueur d'arête de 20 à 40 cm, de préférence d'environ 30 cm.

8. Pare-chocs selon l'une quelconque des revendications précédentes, **caractérisé en ce que** le renfoncement présente un profil essentiellement circulaire, triangulaire, carré ou polygonal.

9. Pare-chocs selon l'une quelconque des revendications précédentes, **caractérisé en ce qu'**une nervure (214 ; 514) se situe entre deux renfoncements.

10. Pare-chocs selon la revendication 9, **caractérisé en ce que** la nervure s'étend essentiellement parallèlement à un plan de base (526) du pare-chocs.

11. Pare-chocs selon la revendication 9, **caractérisé en ce que** la nervure s'étend sous forme courbe.

12. Pare-chocs selon la revendication 11, **caractérisé en ce que** la courbure de la nervure par rapport au plan de base est concave.

13. Pare-chocs selon l'une quelconque des revendications précédentes, **caractérisé en ce que** le renfoncement présente un renflement (420).

14. Pare-chocs selon l'une quelconque des revendications précédentes, **caractérisé en ce que** le matériau fibreux se compose d'un mat fibreux unique (602) ou de deux mats fibreux ou plus, superposés.

15. Pare-chocs selon l'une quelconque des revendications précédentes, **caractérisé en ce que** le mat fibreux est un mat de fibres naturelles.

16. Porte de véhicule automobile comprenant :
- une limitation extérieure (748),
- un habillage interne (736) et
- un pare-chocs disposé entre la limitation extérieure et l'habillage interne selon l'une quelconque des revendications précédentes 1 à 15.

17. Porte de véhicule automobile selon la revendication 16, dans laquelle le premier pare-chocs est disposé de telle sorte que son plan de base s'étende verticalement.

18. Porte de véhicule automobile selon la revendication 16 ou 17, dans lequel le pare-chocs est disposé de telle sorte que son plan de base soit en regard de l'habillage interne.

19. Porte de véhicule automobile selon la revendication 16, 17 ou 18, dans laquelle le deuxième pare-chocs (738) est disposé sous le premier pare-chocs, le deuxième pare-chocs présentant une plus grande rigidité que le premier pare-chocs.
